# EUROPÄISCHE PATENTSCHRIFT

(11) **EP 1 658 742 B1**
(45) Veröffentlichungstag und Bekanntmachung des Hinweises auf die Patenterteilung: **30.10.2013**
(21) Anmeldenummer: 03753261.1
(22) Anmeldetag: 26.08.2003
(51) Int. Cl.: H04W 4/14, H04M 1/725, H04W 4/18, H04W 92/18

(54) **VERFAHREN ZUR ÜBERTRAGUNG VON langen TEXTNACHRICHTEN IM TEXTMODE**
METHOD FOR THE TRANSMISSION OF long TEXT MESSAGES IN TEXT MODE
PROCEDE DE TRANSMISSION DE MESSAGES TEXTUELS longs EN MODE TEXTE

(43) Veröffentlichungstag der Anmeldung: 24.05.2006
(73) Patentinhaber: Gemalto M2M GmbH, 81541 München (DE)
(72) Erfinder: LAMBRECHT, Peter, 12247 Berlin (DE); OSTHEEREN, André, 12169 Berlin (DE)
(74) Vertreter: Eisenführ, Speiser & Partner
(86) Internationale Anmeldenummer: PCT/DE2003/002872
(87) Internationale Veröffentlichungsnummer: WO 2005/027548

(56) Entgegenhaltungen:
- WO-A-03/051080
- "Digital cellular telecommunications system (Phase 2+); UNIVERSAL MOBILE TELECOMMUNICATIONS SYSTEMS (UMTS); TECHNICAL REALIZATION OF THE SHORT MESSAGE SERVICE (SMS) (3G TS 23.040 VERSION 5.5.1 RELEASE 5)" ETSI TS 123 040 V5.5.1, September 2002 (2002-09), Seiten 1-13, 25,26,55,64-69,73,74, XP002282828
- "Digital cellular telecommunications system (Phase 2+);Universal Mobile Telecommunications System (UMTS);Use of Data Terminal Equipment - Data Circuit terminating Equipment (DTE-DCE) interface for Short Message Service (SMS) and Cell Broadcast Service (CBS)(3GPP TS 27.005 version 5.0.0 Release 5)" ETSI TS 127 005 V5.0.0, XX, XX, Juni 2002 (2002-06), Seiten 1-69, XP002282827

## Beschreibung

Die Erfindung betrifft ein Verfahren zur Übertragung von Textnachrichten und im Besonderen ein Verfahren zur Übertragung von Textnachrichten, beispielsweise Steuercodes oder ähnlichem, mit mehr als 160 Zeichen zwischen einem Mobilfunkendgerät und einem Datenendgerät, einer Maschine, einem Computer oder ähnlichem - also außerhalb der Luftschnittstelle - mit einem AT-Befehlssatz sowie ein Datenendgerät zur Durchführung des Verfahrens.

Mobile Telekommunikationsendgeräte haben aufgrund signifikanter Vorteile gegenüber festnetzgebundenen Endgeräten massenhaft Verwendung sowohl im geschäftlichen als auch im privaten Bereich gefunden. Hierzu hat vor allem die Möglichkeit praktisch uneingeschränkter Erreichbarkeit auch bei hoher persönlicher Mobilität der Teilnehmer beigetragen, wobei aufgrund der flächendeckenden Durchsetzung des GSM-Standards sogar eine länderübergreifende Benutzung möglich ist. Zudem bieten die Betreiber terrestrischer Mobilfunknetze, wie etwa des GSM-Netzes, dem Teilnehmer auch Dienste an, die das Festnetz nicht bietet. Ein Beispiel eines derartigen Dienstes war bis vor kurzem der Empfang und das Versenden von Textkurznachrichten (SMS = Short Message Service).

SMS stellt eine unkomplizierte und schnelle Möglichkeit dar, Textnachrichten mit einer maximalen Zeichenanzahl von 160 Zeichen über Mobilfunknetze zu übertragen. Gemäß neuerer Entwicklungen wird SMS allerdings nicht nur zur Übertragung von Textnachrichten, als Ersatz für eine Audiokommunikation verwendet. Vielmehr gewinnt SMS auch in der Steuerungstechnik zunehmend an Bedeutung, wobei die Übertragung von Textnachrichten folglich nicht ausschließlich über Mobilfunknetze, sondern in deren Peripherie auch über IrDa, Bluetooth oder ähnliche Verbindungen erfolgt. Gerade die Verwendung des flächendeckenden GSM-Netzes ermöglicht es beispielsweise, Maschinen per SMS-Übertragung jederzeit von jedem Punkt der Erde anzusteuern und zu bedienen. So ist es beispielsweise möglich per SMS eine entsprechend ausgerüstete Heizung fernzubedienen, indem Steuercodes in Form einer Textnachricht über-tragen werden.

Die Kommunikation zwischen einem Mobilfunkendgerat und einer Maschine, einem Computer o.a. verwendet üblicherweise den AT-Befehlssatz. Dieser wurde vom amerikanischen Modemhersteller HAYES normiert und ist heute ModemStandard. Ein teilweise modifizierter AT-Befehlssatz zur Datenkommunikation zwischen Mobilfunkendgeräten ist in der 3GPP27.005 und der 3GPP27.007 definiert. Die Kommunikation zwischen einem Mobilfunkendgerat und einer Maschine, einem Computer o.a. kann bei Verwendung des AT-Befehlssatzes unter anderem auch über eine serielle Schnittstelle (Datenkabel), Bluetooth, IrDa o.a. erfolgen.

Da eine Textnachricht bei der SMS-Übertragung maximal aus 160 Zeichen bestehen darf, können längere Textnachrichten nur durch eine Verteilung auf mehrere Short Messages mit maximal 160 Zeichen versendet werden. Durch eine z. B. in Kap. 3.9.3 der 3GPPTS123.040 für die Luftschnittstelle zwischen Mobilstation und Service Center beschriebene spezielle Kodierung in jeder Short Message werden diese dann als eine zusammenhängende Short Message erkannt. Eine derartige Verbindung von mehreren Short Messages ist definiert als eine Concatenated Short Message. Die AT-Kommandos zum Schreiben, Senden und Lesen von Short Messages und Concatenated Short Messages zwischen einer Mobilstation (MS) und einer technischen Einrichtung (TE) sind in der 3GPP27.005 definiert.

Der AT-Befehlssatz zur Short Message Übertragung weist zwei Modi auf: den Textmode und den PDU-Mode. Im Textmode kann der Nachrichtentext der Short Message im Klartext eingegeben und auch als Klartext übertragen und ausgelesen werden. Im PDU-Mode dagegen werden sowohl der Text als auch zusätzliche Informationen (wie beispielsweise Absenderidentifikation, Zielnummer, Zeitstempel etc.) bei der Eingabe hexadezimal kodiert. Dieser Hexadezimalcode wird dann übertragen und am Empfängergerät wieder in einen Klartext dekodiert. Des weiteren besteht die Möglichkeit, im PDU-Mode kodierte Textnachrichten mit speziellen Algorithmen zu packen und so das Datenvolumen zu minimieren.

Die Übertragung von Concatenated Short Messages über die Luftschnittstelle ist jedoch gemäß 3GPPTS123.040 nur im PDU-Mode möglich. Eine Concatenated Short Message musste deshalb immer im PDU-Mode geschrieben und gelesen werden. Das hat zur Folge, dass bei der Übertragung von Textnachrichten mit mehr als 160 Zeichen per SMS auf beiden Seiten der Übertragungskette eine Kodierung bzw. Dekodierung stattfindet, wie dies z. B. in Kap. 9.2.3.24.1 der 3GPPTS123.040 beschrieben ist. Diese Übertragung vom Klartext in den PDU-Mode und dann wieder zurück in den Klartext erfordert Zeit, Speicher- und Rechenkapazität, wodurch die Übertragung von Textnachrichten mit mehr als 160 Zeichen per SMS komplizierter und tendenziell langsamer wird.

In WO 03/0510180 ist ein System mit einem ersten, zweiten und dritten Kommunikationsgerät beschrieben, wobei das erste und zweite über ein Kommunikationsnetzwerk mittels einem ersten Kommunikationsprotokoll kommunizieren. Eine vom ersten Gerät zum zweiten Gerät gesendete Nachricht ist gemäß einem zweiten Kommunikationsprotokoll ausgebildet, das vom dritten Kommunikationsgerät verstanden wird. Das System kann weiter einen PC zur Kommunikation mit einer SIM-Karte unter Nutzung eines Vektorgeräts umfassen, beispielsweise eines Smartcard-Lesers, einer Infrarotschnittstelle, einer Bluetooth-Schnittstelle oder eines USB-Kabels. Ein AT-Kommando kann zur Kommunikation mit einem externen Gerät vorgesehen sein, insbesondere gemäß GSM 07.07 oder GSM 07.05.

Der Erfindung liegt somit die Aufgabe zugrunde, ein Verfahren und eine Vorrichtung bereitzustellen, um Textnachrichten zwischen einem Mobilfunkendgerat - und einer Maschine, einem Computer o.a. schneller, einfacher und unter Einsparung von Speicher- und Rechenkapazität zu übertragen.

Diese Aufgabe wird durch ein Verfahren gemäß Patentanspruch 1 und durch ein Gerät gemäß Patentanspruch 7 gelöst. Insbesondere wird die Aufgabe also durch ein Verfahren zur Übertragung von Textnachrichten, beispielsweise Steuercodes oder ähnlichem, mit mehr als 160 Zeichen zwischen einem Mobilfunkendgerat und einer Maschine, einem Computer oder ähnlichem mit einem AT-Befehlssatz gelöst, wobei die Textnachrichten in Form von Concatenated Short Messages versendet werden. Diese bestehen aus einer Sequenz von n Short Messages mit jeweils maximal 160 Zeichen. Der verwendete Übertragungsmode zur Übertragung der Concatenated Short Messages ist der Textmode.

Weiter wird die Aufgabe durch ein Datenendgerät zur Übertragung von Textnachrichten, beispielsweise Steuercodes oder ähnlichem, mit mehr als 160 Zeichen gelöst, wobei das Datenendgerät einen AT-Befehlssatz beinhaltet. Das Gerät ist dabei derart ausgebildet, dass die Übertragung der Textnachrichten in Form von Concatenated Short Messages im Textmode erfolgen kann.

Ein Vorteil des erfindungsgemäßen Verfahrens liegt darin, dass bei der Übertragung einer Textnachricht mit mehr als 160 Zeichen auf die Konvertierung in eine Textnachricht mit hexadezimaler Kodierung verzichtet werden kann. Da sowohl die Konvertierung der Textnachricht in den PDU-Mode als auch die Konvertierung der übertragenen Nachricht zurück in einen lesbaren Klartext entfällt, liefert das erfindungsgemäße Verfahren ein gegenüber dem Stand der Technik deutlich vereinfachtes Verfahren zur Übertragung von Textnachrichten.

Vorteile und Zweckmäßigkeiten der Erfindung ergeben sich im übrigen aus den Unteransprüchen sowie der nachfolgenden Beschreibung bevorzugter Ausführungsbeispiele anhand der beiliegenden Figuren.

Vorzugsweise wird das erfindungsgemäße Verfahren zur Übertragung von Textnachrichten bei Systemen angewandt, die über eine serielle Schnittstelle, Bluetooth, IrDa o.ä. miteinander verbunden sind. So ist es beispielsweise möglich, eine Heizung über ein GSM-Modul durch die Übertragung von Textnachrichten in Form von Steuercodes fernzusteuern. Auch wenn die am GSM-Modul empfangenen Steuercodes länger als 160 Zeichen sind, müssen sie erfindungsgemäß nicht mehr in den PDU-Mode kodiert werden, sondern können direkt im Textmode an den Steuercomputer der Heizung übertragen werden. Zur Übertragung muss die Textnachricht folglich einfach in eine Concatenated Short Message, bestehend aus einer Sequenz von n Short Messages mit maximal 160 Zeichen zerlegt werden, welche dann einzeln im Textmode übertragen und am Empfängergerät wieder zu einer Textnachricht zusammengesetzt werden.

Dazu weist der AT-Befehlssatz wenigstens einen Parameter zur Zuweisung einer Zusatzinformation zu jeder Short Message auf, wobei diese Zusatzinformation über den entsprechenden Parameter zugefügt, übertragen und ausgelesen wird. Diese Zusatzinformation ermöglicht den Versand und den richtigen Empfang bzw. die Auflistung der einzelnen Short Messages aus der Sequenz der n Short Messages und das anschließende Zusammenstellen zur ursprünglichen Textnachricht mit mehr als 160 Zeichen auf der Empfängerseite.

Beispielsweise weist der AT-Befehlssatz einen Parameter <seq_nr> auf, der der Zuweisung einer eindeutigen Sequenznummer zu jeder einzelnen Short Message aus der Sequenz der n Short Messages dient. Wird also beispielsweise eine Textnachricht in vier einzelne Short Messages zerlegt, welche jeweils weniger als 160 Zeichen beinhalten, werden diesen vier Short Messages eindeutige Sequenznummern 1 bis 4 zugewiesen. Dabei ist es sinnvoll, der ersten Short Message aus der Sequenz der Short Messages eine 1 und jeder weiteren eine um 1 erhöhte Sequenznummer zuzuweisen. Natürlich ist aber auch jede andere Nummerierung anwendbar.

Des weiteren kann der AT-Befehlssatz einen Parameter <max_nr> enthalten, der der Zuweisung einer Gesamtanzahl n der in der Sequenz enthaltenen n Short Messages zu wenigstens einer Short Message aus der Sequenz der n Short Messages dient. Dieser Parameter <max_nr> ist beispielsweise zur Kontrolle verwendbar, ob auch wirklich alle n Short Messages einer Concatenated Short Messages übertragen wurden. Des weiteren ist es beispielsweise möglich, den Übertragungsvorgang dann zuterminieren, wenn die Sequenznummer <seq_nr> der übersandten Short Message mit der maximalen Anzahl <max_nr> übereinstimmt, da dann alle Short Messages aus der Sequenz der Short Messages übertragen wurden.

Des weiteren kann der AT-Befehlssatz einen Parameter <ref_nr> enthalten, der der Zuweisung einer Referenznummer zu jeder Short Message aus der Sequenz der n Short Messages dient. Diese Referenznummer <ref_nr> ermöglicht eine eindeutige Zuordnung einer jeden einzelnen Short Message zu einer bestimmten Concatenated Short Message. Wird beispielsweise von zwei verschiedenen Sendegeräten je eine Concatenated Short Messages an das gleiche Endgerät übertragen, ermöglicht es diese Referenznummer, die jeweiligen Short Messages eindeutig zur jeweiligen Concatenated Short Message hinzuzufügen und daraus wieder je eine Textnachricht zu erstellen.

Der Parameter <IEIa> wird mit Vorteil zur Zuweisung eines Informationselementes verwendet, das zur Identifizierung der Kodierung der Referenznummer einer jeden Short Message aus der Sequenz der Short Messages dient. Dabei ist entweder eine 8 Bit-Referenznummer oder eine 16 Bit-Referenznummer. Je nach Kodierung wird der Parameter <IEIa> auf den Wert 0 bzw. auf den Wert 8 gesetzt.

Das erfindungsgemäße Übertragungsverfahren beinhaltet vorzugsweise folgende Verfahrensschritte:
Zuerst wird auf der Senderseite die Textnachricht eingelesen. Dies kann über eine Tastatur, über Spracheingabe oder jeden anderen denkbaren Weg erfolgen.
Nach dem Einlesen der Textnachricht wird diese in eine Concatenated Short Message, bestehend aus einer Sequenz von n Short Messages mit maximal 160 Zeichen, zerlegt. Um nach Empfang der Textnachricht auf der Empfängerseite die Concatenated Short Message, bestehend aus einer Sequenz von n Short Messages, wieder in die ursprüngliche Textnachricht zusammenzufügen, wird jeder Short Message aus dieser Concatenated Short Message beim Zerlegen der Textnachricht wenigstens ein Parameter zugefügt, um das Zusammenfügen der Textnachricht auf der Empfängerseite später wieder zu ermöglichen.
Nach dem Zerlegen der Textnachricht in einzelne Short Messages werden diese zur Empfängerseite übertragen und dort zur ursprünglichen Textnachricht zusammengesetzt. Dabei dienen die zuvor genannten Parameter zur richtigen Anordnung und Auflistung der einzelnen Short Messages zur Gesamttextnachricht.

Das erfindungsgemäße Datenendgerät zur Übertragung von Textnachrichten ist bevorzugt über eine serielle Schnittstelle, Bluetooth, IrDa o.ä. an mindestens ein zweites Datenendgerät anschließbar. Durch diese Verbindung zweier Datenendgeräte ist es beispielsweise möglich, auf einfache Weise per Übertragung von Textnachrichten Steuerungs- und Regelungsfunktionen auszuführen, wobei die Länge der Textnachrichten nunmehr von untergeordneter Bedeutung ist. So ermöglicht beispielsweise die Verbindung eines erfindungsgemäßen Datenendgerätes, beispielsweise eines Mobilfunkgerätes, über eine serielle Schnittstelle mit einem zweiten Datenendgerät, beispielsweise mit einem Steuercomputer einer Heizung, die Fernsteuerung dieser Heizung per Übertragung von Textnachrichten. Erfindungsgemäß können nun auch Textnachrichten mit mehr als 160 Zeichen, wie beispielsweise umfangreichere Steuerprogramme, schnell und unkompliziert übertragen und ausgeführt werden. Der Vorteil, dass aufgrund der fehlenden Kodierung und Dekodierung in und aus dem PDU-Mode, der Programmablauf erheblich vereinfacht und beschleunigt wird, ist beispielsweise bei der Verwendung von Mobilfunkendgeräten in Verbindung mit GPS-Systemen, wie es neuerdings vermehrt auf dem Markt zu finden ist, von Bedeutung. Durch das erfindungsgemäße Datenendgerät ist es nun möglich, einfach und unkompliziert beispielsweise Positionsangaben in Form von Klartextnachrichten per SMS vom GPS-System an das mobile Datenendgerät zur weiteren Übertragung abzusetzen.

Vorzugsweise ist das Datenendgerät dabei so ausgebildet, dass wenigstens ein Parameter zur Zuweisung wenigstens einer Zusatzinformation zu jeder Short Message aus der Sequenz der n Short Messages beinhaltet ist, wobei diese Zusatzinformationen über die entsprechenden Parameter zugefügt, übertragen und ausgelesen werden. Diese Parameter sind bevorzugt eine Sequenznummer, die alle Short Messages aus der Sequenz der Short Messages eindeutig nummeriert und somit in eine richtige Reihenfolge bringt, ein Parameter für die maximale Anzahl an Short Messages in der Sequenz der n Short Messages, um beispielsweise festzustellen, ob am Ende der Übertragung alle n Short Messages übertragen worden sind, ein Parameter zur Zuweisung einer Referenznummer zu jeder Short Message, um deren Zugehörigkeit zu einer bestimmten Concatenated Short Message anzuzeigen sowie ein Informationsparameter über die Kodierung der entsprechenden Referenznummer.

Nachfolgend wird die Erfindung anhand von Ausführungsbeispielen beschrieben, die anhand der Abbildungen näher erläutert werden. Hierbei zeigen:
Fig. 1 die Befehlssyntax zum Versenden einer ersten Concatenated Short Message in ein Mobilendgerät im Textmode,
Fig. 2 die Befehlssyntax für das Speichern einer Concatenated Short Message im Textmode,
Fig. 3 die Befehlssyntax für das Auslesen einer Concatenated Short Message im Textmode auf der Empfängerseite,
Fig. 4 die Befehlssyntax für das Auflisten einer Concatenated Short Message im Textmode auf der Empfängerseite,
Fig. 5 die Befehlssyntax zum Speichern einer zweiten Concatenated Short Message im Textmode,
Fig. 6 die Befehlssyntax zum Senden einer dritten Concatenated Short Message im PDU-Mode und
Fig. 7 die Befehlssyntax zum Senden der dritten Concatenated Short Message aus Fig. 6 im Textmode.

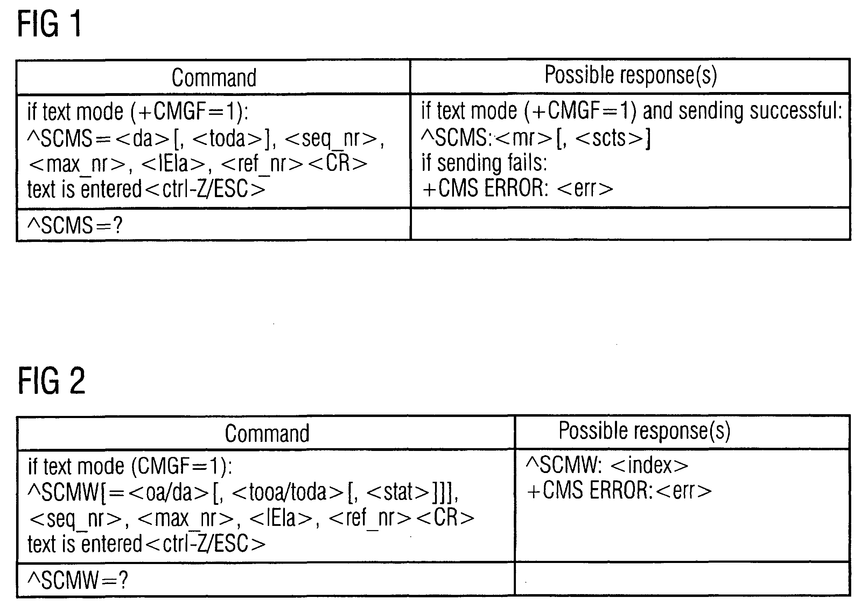

In Fig. 1 ist die Befehlssyntax zum Senden einer Concatenated Short Message im Textmode dargestellt. Durch den Ausführungsbefehl wird eine Textnachricht von einem TE (Terminal Equipment) an ein Netzwerk übertragen (SMS-SUBMIT). Ein Nachrichtenreferenzwert <mr> wird bei erfolgreicher Übertragung an das TE zurückgesendet. Schlägt die Übertragung zu einem Netzwerk oder an ein ME (Modem Equipment) fehl, erhält man den Fehlercode +CMS ERROR: <err> zurück. Je nach Spezifikation kann dieser Fehlercode unterschiedliche Werte annehmen. Dabei ist von Bedeutung, dass dieser Befehl abbrechbar sein sollte.
- Der eingegebene Text (3GPP TS 23.040[3] TP-Data-Unit) wird an die Adresse <da> übertragen. Unter Beachtung aller aktuellen Einstellungen (siehe Set Text Mode Parameter +CSMP und Service Centre Adresse +CSCA) wird eine aktuelle PDU (Paket-Data-Unit) im ME bzw. TA (Terminal Adapter) gebildet.
- Der TA sollte nach dem Beenden der Befehlszeile mit <CR> eine Sequenz von vier Zeichen <CR> <LF> <greater_than> <space> (IRA 13, 10 62, 32) übertragen. Danach kann ein Text vom TE in das ME bzw. TA eingegeben werden.
- Während der Text eingegeben wird, sollte sich das DCD-Signal im Einschaltzustand befinden.
- Das vom TA zurückerhaltene Echo der eingegebenen Zeichen wird durch den V.25ter Echo Befehl E kontrolliert.
- Der eingegebene Text sollte dabei wie folgt formatiert sein:
   -- Wenn <dcs> (gesetzt mit +CSMP) anzeigt, dass ein 3GPP TS 23.038 [2] GSM 7 Bit Standardalphabet verwendet wird und <fo> anzeigt, dass die 3GPP TS 23.040 [3] TP-User-Data-Header-Indication nicht gesetzt ist, wird:
      --- Wenn der TE-Zeichensatz ein anderer als ein "HEX" ist (siehe Befehl Select TE Charakter Set +CSCS in der 3GPP TS 27.007 [9]), konvertiert das ME bzw. TA den eingegebenen Text in einen GSM 7 Bit Standard-Zeichensatz. Dabei kann "backspace" zum Löschen des letzten Zeichens und "carriage return" verwendet werden (Wie zuvor erwähnt, sollte nach jedem vom Anwender eingegebenen "carriage return" eine Sequenz von vier Zeichen zum TE gesendet werden).
      --- Wenn der Zeichensatz des TE ein "HEX"-Zeichensatz ist, sollte der eingegebene Text aus zwei IRA-Zeichen langen Hexadezimalzahlen bestehen, die das ME bzw. TA in GSM 7 Bit Standard-Zeichen konvertiert (Beispielsweise wird 17 (IRA 49 und 55) in das Zeichen II (GSM 7 Standard-Alphabet 23) konvertiert).
   -- Wenn <dcs> anzeigt, dass ein 8 Bit oder ein UCS2 Datenkodierschema verwendet wird oder wenn <fo> anzeigt, dass eine 3GPP TS 23.040 [3] TP-User-Data-Header-Indication gesetzt ist, sollte der eingegebene Text aus zwei IRA-Zeichen langen Hexadezimalzahlen bestehen, den das ME bzw. TA in ein 8 Bit octet konvertiert (Beispielsweise werden die zwei Buchstaben 2A (IRA 50 und 65) in ein octet mit dem integer Wert 42 konvertiert).
- Durch die Übergabe des <ESC>-Zeichens (IRA 27) kann die Übertragung abgebrochen werden.
- Um das Ende des Message Body anzuzeigen, muss <ctrl-Z> (IRA 26) verwendet werden.

Die so übertragene Short Message wird auf der Empfängerseite ausgelesen.

In der in Fig. 2 dargestellten Befehlssyntax wird eine Concatenated Message in den Speicher eines Mobilendgerätes geschrieben, um diese später zu versenden. Der Ausführungsbefehl (entweder SMS-DELIVER oder SMS-SUBMIT) speichert die Textnachricht in den Speicherbereich <mem2>. Der Speicherort <index> der gespeicherten Textnachricht wird dabei zurückerhalten. Bei Bedarf wird der Status der Textnachricht durch den Parameter <stat> auf "Gespeichert ungesendet" gesetzt. Darüber hinaus kann der Parameter <stat> allerdings auch andere Werte für unterschiedliche Betriebszustände annehmen.

Die Eingabe des Textes erfolgt konform zum Sent Message Befehl +CMGS. Schlägt der Schreibvorgang fehl, wird am Schluss der Fehlercode +CMS ERROR: <err> zurückerhalten. Dabei ist zu beachten, dass SMS-COMMANDs und SMS-STATUS-REPORTs nicht im Textmode abgespeichert werden können. Nachdem die zu versendende Textnachricht in den Speicher des Mobilendgerätes geschrieben wurde, kann diese versendet werden.

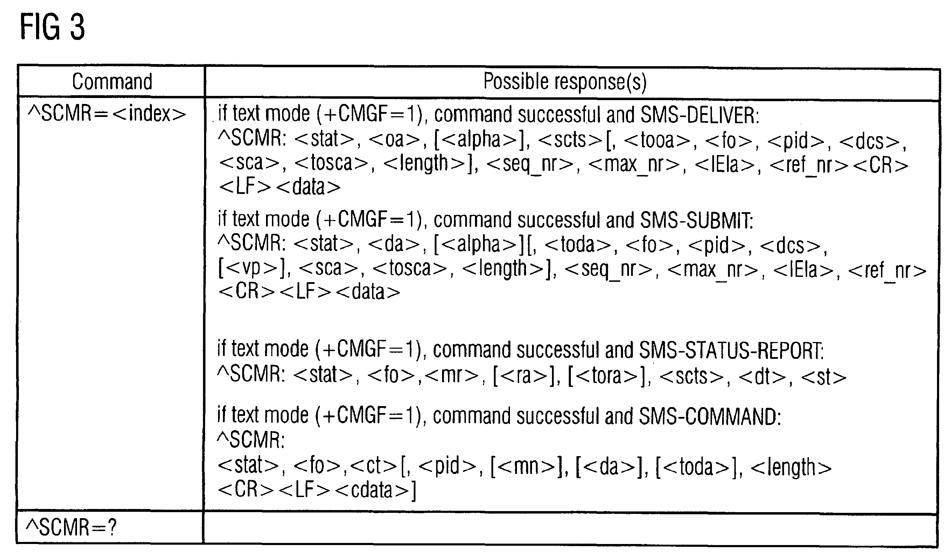

Figur 3 zeigt die Befehlssyntax zum Auslesen einer Short Message am Empfängergerät. Der Ausführungsbefehl überträgt die Nachricht mit dem Positionswert <index> aus dem Nachrichtenspeicher <mem1> an das TE. Zur Verwendung der italic (kursiv) Textmode Parameter sei auf den Befehl Show Text Mode Parameters +CSDH Bezug genommen. Wenn der Status der Textnachricht "Empfangen ungelesen" ist, wird der Status im Speicher auf "Empfangen gelesen" geändert. Wenn das Lesen fehlschlägt, wird der Fehlercode +CMS ERROR: <err> übertragen.

Nach dem Einlesen der Concatenated Message auf der Empfangsseite wird diese aufgelistet.

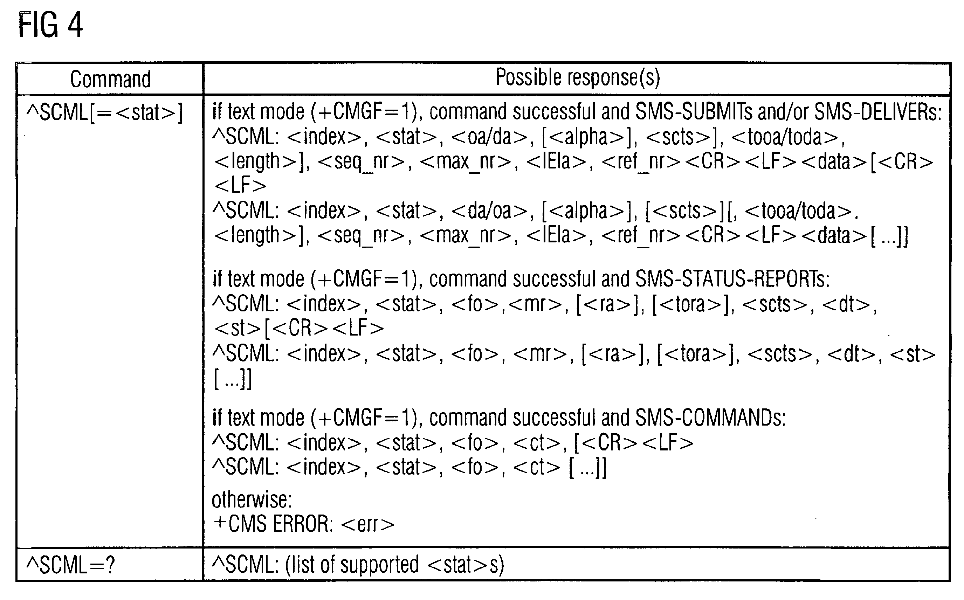

Figur 4 zeigt die Befehlssyntax zur Auflistung aller Textnachrichten, inklusive der Parameter für Concatenated Messages, im Empfängergerät. Der Ausführungsbefehl überträgt Textnachrichten mit dem Statuswert <stat> zurück vom Nachrichtenspeicher <mem1> an das TE. Die Parameter für den Textmode in italic können dem Befehl Show Text Mode Parameters +CSDH entnommen werden. Wenn der Status der Textnachricht auf "Empfangen ungelesen" steht, wird der Status im Speicher auf "Empfangen gelesen" geändert. Wenn das Auflisten fehlschlägt, wird der Fehlercode +CMS ERROR: <err> übertragen.

Es ist zu beachten, dass, wenn der gewählte Textspeicher <mem1> unterschiedliche Arten von Short Messages enthalten kann (beispielsweise SMS-DELIVERs, SMS-SUBMITs, SMS-STATUS-REPORTs und SMS-COMMANDs), die Antwort dann aus einer Mischung der Antworten unterschiedlicher SMS-Typen bestehen kann. Die TE-Anwendung kann das Antwortformat durch die Analyse des dritten Antwortparameters feststellen. Nebenbei sei erwähnt, dass ein Testbefehl eine Auflistung aller vom TA unterstützter Statuswerte liefern sollte.

Die in den Figuren 1 bis 4 verwendeten Parameter, die zur Übertragung und zum Empfang von Concatenated Short Messages im Textmode nötig sind, werden im folgenden detailliert beschrieben.

Der Parameter <seq_nr> ist eine 3GPP TS 23.040 Sequenznummer der aktuellen Short Message. Dieser Wert liegt im Bereich zwischen 0 und 255 und kennzeichnet die Sequenznummer einer bestimmten Short Message innerhalb der Concatenated Short Message. Dabei sollte der Wert bei 1 beginnen und schrittweise für jede Short Message, die innerhalb der Concatenated Short Message versandt wird, um 1 erhöht werden. Wenn der Wert gleich 0 ist oder der Wert größer als der Wert im octet 2 ist(dem folgenden Parameter), sollte die Empfangsvorrichtung den gesamten Parameter ignorieren.

<max_nr> zeigt die maximale Anzahl der Short Messages in der Concatenated Short Message dar (3GPP TS 23.040). Dieser Wert liegt im Bereich 0 bis 255 und kennzeichnet die Gesamtzahl der Short Messages innerhalb der Concatenated Short Message. Dabei beginnt der Wert bei 1 und verbleibt konstant für jede Short Message die zu der entsprechenden Concatenated Short Message gehört. Wenn der Wert gleich 0 ist, sollte die Empfangsvorrichtung den gesamten Parameter ignorieren.

Der Parameter <ref_nr> stellt eine 3GPP TS 23.040 Concatenated Short Message Referenznummer dar. Dieses octet sollte einen Modulo 256-Zähler beinhalten, der eine Referenznummer für eine bestimmte Concatenated Short Message anzeigt. Diese Referenznummer sollte für jede Short Message innerhalb der Concatenated Short Message gleich bleiben.

Der 3GPP TS 23.040-Parameter <IEIa> ist ein Identifikationselement für die Kodierung der oben genannten Referenznummer. Dabei lautet die Kodierung wie folgt:

| VALUE (hex) | MEANING | Classification | Repeatability |
|---|---|---|---|
| 00 | Concatenated short messages, 8-bit reference number | SMS Control | No |
| 08 | Concatenated short message, 16-bit reference number | SMS Control | No |

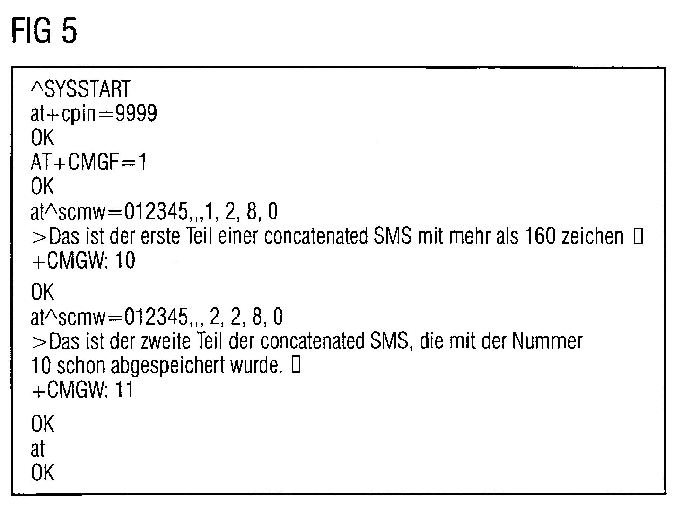

Fig. 5 stellt die Befehlssyntax zum Speichern einer Concatenated Short Message im Textmode dar. Diese Concatenated Short Message besteht aus zwei Short Messages mit den Sequenznummern <seq_nr> 1 und 2. Diese beiden Short Messages bilden zusammen die Concatenated Short Message mit der Referenznummer <ref_nr> 0. Wie aus der Übertragungssyntax ersichtlich, wird neben der Sequenznummer <seq_nr> und der Referenznummer <ref_nr> auch die maximale Anzahl der einzelnen Short Messages innerhalb der Concatenated Short Message, der Parameter <max_nr> übertragen. Da die Concatenated Short Message in diesem Ausführungsbeispiel aus zwei Short Messages besteht ist dieser Parameter <max_nr> 2. Die restlichen Befehle, die bei diesem Ausführungsprotokoll verwendet werden, entsprechen dem eines Standard AT-Befehlssatzes zur SMS-Übertragung.

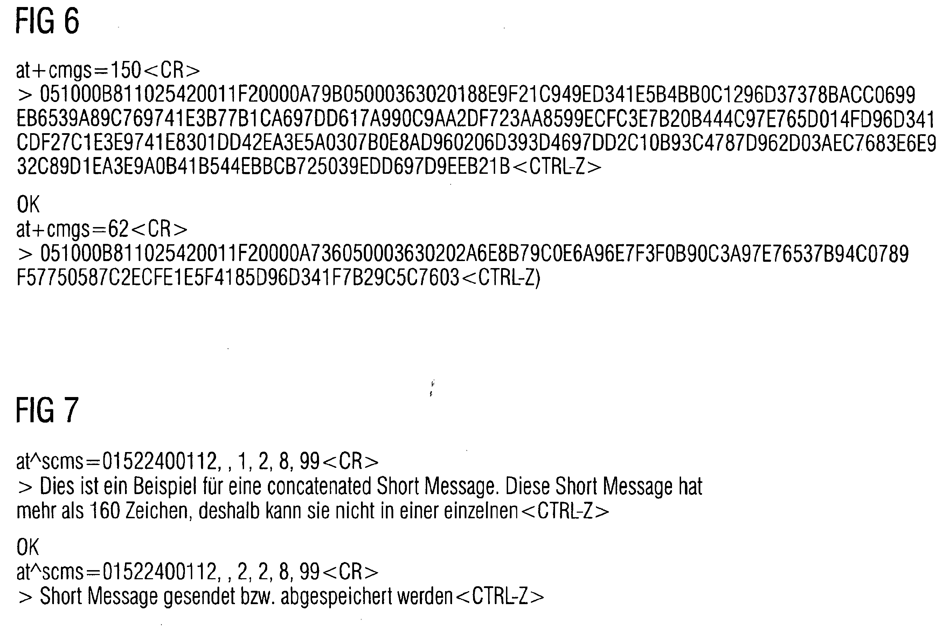

Fig. 6 und 7 stellen die Übertragungssyntax einer Short Message in den unterschiedlichen AT-Übertragungsmodes dar.

Fig. 6 zeigt die Übertragungssyntax einer Concatenated Short Message im PDU-Mode, wie sie aus dem Stand der Technik bekannt ist. Dargestellt ist der AT-Befehl zum Übertragen einer Short Message, gefolgt von einer hexadezimalcodierten Textnachricht. Dieser Code enthält neben der zu übermittelnden Textnachricht auch zusätzliche Informationen wie Absender, Zielnummer, Zeitstempel etc.

In Fig. 7 ist die Übertragungssyntax der Concatenated Short Message aus Fig. 6 im Textmode gezeigt. Die Übertragung der für den Empfang und die Auflistung der Concatenated Short Message nötigen Parameter erfolgt, wie schon zuvor in Fig. 5 dargestellt, durch die Parameter <seq_nr>, <max_nr>, <IEIa> und <ref_nr>. In Fig. 7 werden diesen Parametern folgende Werte zugeordnet: Die beiden Short Messages der Concatenated Short Message erhalten die Sequenznummern <seq_nr> 1 und 2. Die Concatenated Short Message hat die Referenznummer <ref_nr> 99, die Gesamtanzahl der Short Messages innerhalb der Concatenated Short Message ist 2 und wird mit dem Parameter <max_nr> übertragen. Die Kodierung, dargestellt durch den Parameter <IEIa>, weist auf eine Concatenated Short Message mit einer 16-Bit Referenznummer hin.

## Patentansprüche

1. Verfahren zur Übertragung von Textnachrichten, mit mehr als 160 Zeichen zwischen einem Mobilfunkendgerät und einem Datenendgerät, einer Maschine, einem Computer oder einem anderen System mit einem AT- Befehlssatz, wobei die Textnachrichten in Form von Concatenated Short Messages, bestehend aus einer Sequenz von n Short Messages mit jeweils maximal 160 Zeichen, übertragen werden, wobei die Übertragung in einem Textmode erfolgt, und wobei das Verfahren folgende Verfahrensschritte aufweist:
- Einlesen der Textnachricht auf der Senderseite,
- Zerlegen der Textnachricht in eine Concatenated Short Message bestehend aus einer Sequenz von n Short Messages mit jeweils maximal 160 Zeichen, wobei beim Zerlegen der Textnachricht wenigstens ein Parameter der Concatenated Short Message zugefügt wird, und der AT-Befehlssatz diesen wenigstens einen Parameter zur Zuweisung wenigstens einer Zusatzinformation zu jeder Short Message aus der Sequenz der Short Messages beinhaltet und der wenigstens eine Parameter zur richtigen Auflistung der einzelnen Short Messages aus der Sequenz der n Short Messages zur ursprünglichen Textnachricht dient und wobei diese Zusatzinformation über den entsprechenden Parameter zugefügt, übertragen und ausgelesen wird.
- Übertragen der Concatenated Short Message,
- Empfangen der Concatenated Short Message auf der Empfängerseite,
- Zusammensetzen der n Short Messages der Concatenated Short Message zur ursprünglichen Textnachricht mit mehr als 160 Zeichen, wobei die Zusatzinformation eine richtige Auflistung der einzelnen Short Messages aus der Sequenz der n Short Messages zur ursprünglichen Textnachricht ermöglicht, unter Fortfall von:
- einer Codierung der Textnachricht in einen PDU-Mode auf der Senderseite,
- einer Decodierung der Concatenated Short Message in den Textmode auf der Empfängerseite.

2. Verfahren zur Übertragung von Textnachrichten nach Anspruch 1, **dadurch gekennzeichnet, dass** die Übertragung über eine serielle Schnittstelle, Bluetooth, IrDa oder einer anderen Verbindung erfolgt.

3. Verfahren zur Übertragung von Textnachrichten nach einem der vorhergehenden Ansprüche, **dadurch gekennzeichnet, dass** der AT-Befehlssatz einen Parameter <seq_nr> zur Zuweisung einer eindeutigen Sequenznummer zu jeder einzelnen Short Message aus der Sequenz der Short Messages beinhaltet.

4. Verfahren zur Übertragung von Textnachrichten nach einem der vorhergehenden Ansprüche, **dadurch gekennzeichnet, dass** der AT-Befehlssatz einen Parameter <max_nr> zur Zuweisung einer Gesamtanzahl der in der Sequenz enthaltenen Short Messages zu wenigstens einer Short Message aus der Sequenz der Short Messages beinhaltet.

5. Verfahren zur Übertragung von Textnachrichten nach einem der vorhergehenden Ansprüche, **dadurch gekennzeichnet, dass** der AT-Befehlssatz einen Parameter <ref_nr> zur Zuweisung einer Referenznummer zu jeder Short Message aus der Sequenz der Short Messages aufweist.

6. Verfahren zur Übertragung von Textnachrichten nach Anspruch 5, **dadurch gekennzeichnet, dass** der AT-Befehlssatz einen Parameter <IEla> zur Zuweisung eines Informationselementes zur Identifizierung der Codierung der Referenznummer zu jeder Short Message aus der Sequenz der Short Messages aufweist.

7. Datenendgerät zur Übertragung von Textnachrichten mit mehr als 160 Zeichen, das einen AT-Befehlssatz beinhaltet, und das, zur Ausführung des Verfahrens nach einem der Ansprüche 1 bis 6, derart ausgebildet ist, dass die Übertragung der Textnachrichten von und zu einem Mobilfunkendgerät in Form von Concatenated Short Messages in einem Textmode erfolgen kann, wobei der AT-Befehlssatz derart ausgebildet ist, dass er wenigstens einen Parameter zur Zuweisung wenigstens einer Zusatzinformation zu jeder Short Message aus der Sequenz der Short Messages beinhaltet und der wenigstens eine Parameter zur richtigen Auflistung der einzelnen Short Messages aus der Sequenz der n Short Messages zur ursprünglichen Textnachricht dient und wobei diese Zusatzinformation über den entsprechenden Parameter zugefügt, übertragen und ausgelesen werden kann und wobei beim Zerlegen der Textnachricht der wenigstens eine Parameter der Concatenated Short Message zuführbar ist und beim Zusammensetzen der n Short Messages der Concatenated Short Message zur ursprünglichen Textnachricht mit mehr als 160 Zeichen die Zusatzinformation eine richtige Auflistung der einzelnen Short Messages aus der Sequenz der Short Messages zur ursprünglichen Textnachricht ermöglicht.

8. Datenendgerät zur Übertragung von Textnachrichten nach Anspruch 7, **dadurch gekennzeichnet, dass** es eine serielle Schnittstelle, Bluetooth, IrDa oder eine andere Verbindung zum Anschluss an mindestens ein zweites Datenendgerät aufweist.

9. Datenendgerät zur Übertragung von Textnachrichten nach einem der Ansprüche 7 bis 8, **dadurch gekennzeichnet, dass** der AT-Befehlssatz einen Parameter <seq_nr>; zur Zuweisung einer eindeutigen Sequenznummer zu jeder einzelnen Short Message aus der Sequenz der Short Messages beinhaltet.

10. Datenendgerät zur Übertragung von Textnachrichten nach einem der Ansprüche 7 bis 9, **dadurch gekennzeichnet, dass** der AT-Befehlssatz einen Parameter <max_nr> zur Zuweisung einer Gesamtanzahl der in der Sequenz enthaltenen Short Messages zu wenigstens einer Short Message aus der Sequenz der Short Messages beinhaltet.

11. Datenendgerät zur Übertragung von Textnachrichten nach einem der Ansprüche 7 bis 10, **dadurch gekennzeichnet, dass** der AT-Befehlssatz einen Parameter <ref_nr>; zur Zuweisung einer Referenznummer zu jeder Short Message aus der Sequenz der Short Messages aufweist.

12. Datenendgerät zur Übertragung von Textnachrichten nach Anspruch 11, **dadurch gekennzeichnet, dass** der AT-Befehlssatz einen Parameter <IEIa> zur Zuweisung eines Informationselementes zur Identifizierung der Codierung der Referenznummer zu jeder Short Message aus der Sequenz der Short Messages aufweist.

## Claims

1. Method for transmitting text messages having more than 160 characters between a mobile-radio terminal and a data terminal, a machine, a computer or another system having an AT command set, wherein the text messages are transmitted in the form of concatenated short messages consisting of a sequence of n short messages each having a maximum of 160 characters, wherein the transmission takes place in a text mode, and wherein the method exhibits the following steps:
- reading in the text message on the transmitter side,
- disassembling the text message into a concatenated short message consisting of a sequence of n short messages each having a maximum of 160 characters, wherein in the course of disassembling the text message at least one parameter is added to the concatenated short message, and the AT command set includes this at least one parameter for allocating at least one item of additional information to each short message from the sequence of short messages, and the at least one parameter serves for correct listing of the individual short messages from the sequence of n short messages to yield the original text message, and wherein this item of additional information concerning the corresponding parameter is added, transmitted and read out,
- transmitting the concatenated short message,
- receiving the concatenated short message on the receiver side,
- assembling the n short messages of the concatenated short message to yield the original text message having more than 160 characters, wherein the item of additional information enables a correct listing of the individual short messages from the sequence of n short messages to yield the original text message, with the omission of:
- an encoding of the text message into a PDU mode on the transmitter side,
- a decoding of the concatenated short message into the text mode on the receiver side.

2. Method for transmitting text messages according to Claim 1, **characterised in that** the transmission takes place via a serial interface, Bluetooth, IrDA or another connection.

3. Method for transmitting text messages according to one of the preceding claims, **characterised in that** the AT command set includes a parameter <seq_nr> for allocating a unique sequence number to each individual short message from the sequence of short messages.

4. Method for transmitting text messages according to one of the preceding claims, **characterised in that** the AT command set includes a parameter <max_nr> for allocating a total number of short messages included in the sequence to at least one short message from the sequence of short messages.

5. Method for transmitting text messages according to one of the preceding claims, **characterised in that** the AT command set exhibits a parameter <ref_nr> for allocating a reference number to each short message from the sequence of short messages.

6. Method for transmitting text messages according to Claim 5, **characterised in that** the AT command set exhibits a parameter <IEIa> for allocating an information element for identifying the coding of the reference number to each short message from the sequence of short messages.

7. Data terminal for transmitting text messages having more than 160 characters, which includes an AT command set and which for the purpose of executing the method according to one of Claims 1 to 6 has been designed in such a manner that the transmission of the text messages from and to a mobile-radio terminal can take place in the form of concatenated short messages in a text mode, wherein the AT command set has been configured in such a manner that it includes at least one parameter for allocating at least one item of additional information to each short message from the sequence of short messages, and the at least one parameter serves for correct listing of the individual short messages from the sequence of n short messages to yield the original text message, and wherein this item of additional information concerning the corresponding parameter can be added, transmitted and read out, and wherein in the course of disassembling the text message the at least one parameter is capable of being supplied to the concatenated short message, and in the course of assembling the n short messages of the concatenated short message to yield the original text message having more than 160 characters the item of additional information enables a correct listing of the individual short messages from the sequence of short messages to yield the original text message.

8. Data terminal for transmitting text messages according to Claim 7, **characterised in that** it exhibits a serial interface, Bluetooth, IrDA or another connection for accessing at least one second terminal.

9. Data terminal for transmitting text messages according to one of Claims 7 to 8, **characterised in that** the AT command set includes a parameter <seq_nr> for allocating a unique sequence number to each individual short message from the sequence of short messages.

10. Data terminal for transmitting text messages according to one of Claims 7 to 9, **characterised in that** the AT command set includes a parameter <max_nr> for allocating a total number of short messages contained in the sequence to at least one short message from the sequence of short messages.

11. Data terminal for transmitting text messages according to one of Claims 7 to 10, **characterised in that** the AT command set exhibits a parameter <ref_nr> for allocating a reference number to each short message from the sequence of short messages.

12. Data terminal for transmitting text messages according to Claim 11, **characterised in that** the AT command set exhibits a parameter <IEIa> for allocating an information element for identifying the coding of the reference number to each short message from the sequence of short messages.

## Revendications

1. Procédé de transmission de messages textuels ayant plus de 160 caractères entre un terminal de téléphonie mobile et un terminal de données, une machine, un ordinateur ou un système autre ayant un jeu d'instructions AT, les messages textuels étant transmis sous forme de short messages concaténés, constitués d'une séquence de n short messages ayant respectivement au maximum 160 caractères, la transmission s'effectuant dans un mode texte et le procédé ayant les stades suivants :
- lecture du message textuel du côté émetteur,
- décomposition du message textuel en un short message concaténé constitué d'une séquence de short messages ayant respectivement au maximum 160 caractères, au moins un paramètre du short message concaténé étant ajouté lors de la décomposition du message textuel, et le jeu d'instructions AT contenant ce au moins un paramètre pour l'affectation d'au moins une information supplémentaire à chaque short message de la séquence des short messages et le au moins un paramètre servant au listage correct des divers short messages de la séquence des n short messages en le message textuel d'origine et cette information supplémentaire étant ajoutée par le paramètre correspondant, transmise et lue,
- transmission du short message concaténé,
- réception du short message concaténé du côté du récepteur,
- composition des n short messages du short message concaténé en le message textuel d'origine ayant plus de 160 caractères, l'information supplémentaire rendant possible un listage correct des divers short messages de la séquence des n short messages en le message textuel d'origine avec suppression de :
- un codage du message textuel dans un mode PDU du côté de l'émetteur,
- un décodage du short message concaténé dans le mode texte du côté du récepteur.

2. Procédé de transmission de messages textuels suivant la revendication 1, **caractérisé en ce que** la transmission s'effectue par une interface série, par Bluetooth, par IrDa ou par une autre liaison.

3. Procédé de transmission de messages textuels suivant l'une des revendications précédentes, **caractérisé en ce que** le jeu d'instructions AT contient un paramètre <seq_nr> d'affectation d'un numéro de séquence univoque à chaque short message individuel de la séquence des short messages.

4. Procédé de transmission de messages textuels suivant l'une des revendications précédentes, **caractérisé en ce que** le jeu d'instructions AT contient un paramètre <max_nr> d'affectation d'un nombre global des short messages contenus dans la séquence à un short message de la séquence des short messages.

5. Procédé de transmission de messages textuels suivant l'une des revendications précédentes, **caractérisé en ce que** le jeu d'instructions AT a un paramètre <ref_nr> d'affectation d'un numéro de référence à chaque short message de la séquence des short messages.

6. Procédé de transmission de messages textuels suivant la revendication 5, **caractérisé en ce que** le jeu d'instructions AT a un paramètre <□E□a> d'affectation d'un élément d'information pour l'identification du codage du numéro de référence à chaque short message de la séquence des short messages.

7. Terminal de données pour la transmission de messages textuels ayant plus de 160 caractères, qui comporte un jeu d'instructions AT et qui, pour la réalisation du procédé suivant l'une des revendications 1 à 6, est constitué de manière à pouvoir effectuer, dans un mode texte, la transmission des messages textuels d'un terminal de téléphonie mobile et à un terminal de téléphonie mobile sous la forme de short messages concaténés, le jeu d'instructions AT étant constitué de manière à ce qu'il comporte au moins un paramètre d'affectation d'au moins une information supplémentaire à chaque short message de la séquence des short messages et le au moins un paramètre sert au listage correct des divers short messages de la séquence des n short messages en le message textuel d'origine et cette information supplémentaire peut être ajoutée par le paramètre correspondant, transmise et lue, et, lors de la décomposition du message textuel, le au moins un paramètre peut être amené au short message concaténé et, lors de la composition des n short messages du short message concaténé en le message textuel d'origine ayant plus de 160 caractères, l'information supplémentaire rend possible un listage correct des divers short messages de la séquence des short messages en le message textuel d'origine.

8. Terminal de données pour la transmission de messages textuels suivant la revendication 7, **caractérisé en ce qu'**il a une interface série, Bluetooth, IrDa ou une autre liaison de connexion à au moins un deuxième terminal de données.

9. Terminal de données pour la transmission de messages textuels suivant l'une des revendications 7 à 8, **caractérisé en ce que** le jeu d'instructions AT contient un paramètre <seq_nr> d'affectation d'un numéro de séquence univoque à chaque short message individuel de la séquence des short messages.

10. Terminal de données pour la transmission de messages textuels suivant l'une des revendications 7 à 9, **caractérisé en ce que** le jeu d'instructions AT contient un paramètre <max_nr> d'affectation d'un nombre global des short messages contenu dans la séquence à un short message de la séquence des short messages.

11. Terminal de données pour la transmission de messages textuels suivant l'une des revendications 7 à 10, **caractérisé en ce que** le jeu d'instructions AT a un paramètre <ref_nr> d'affectation d'un numéro de référence à chaque short message de la séquence des short messages.

12. Terminal de données pour la transmission de messages textuels suivant l'une des revendications 7 à 11, **caractérisé en ce que** le jeu d'instructions AT a un paramètre <□E□a> d'affectation d'un élément d'information pour l'identification du codage du numéro de référence à chaque short message de la séquence des short messages.
